# EUROPÄISCHE PATENTANMELDUNG

(11) **EP 3 113 334 A1**
(43) Veröffentlichungstag der Anmeldung: **04.01.2017**
(21) Anmeldenummer: 15174959.5
(22) Anmeldetag: 02.07.2015
(51) Int. Cl.: H02K 3/38, H02K 5/132, H02K 15/02

(54) **GEKAPSELTE ELEKTRISCHE ROTIERENDE MASCHINE**

(71) Anmelder: Siemens Aktiengesellschaft, 80333 München (DE)
(72) Erfinder: Krompasky, Erik, 25064 Hovorcovice (CZ)

(57) **Zusammenfassung**

Die Erfindung betrifft eine gekapselte elektrische rotierende Maschine (10), aufweisend einen Rotor (7), einen den Rotor (7) umgebenden Stator (1) und einen zwischen dem Rotor (7) und dem Stator (1) befindlichen Luftspalt (6). Um eine hohe Effizienz und eine kompakte Bauweise zu erreichen, wird vorgeschlagen, dass der Stator (1) Statorwicklungen (13) aufweist, welche gekapselt sind und dass der Stator (1) unmittelbar an den Luftspalt (6) angrenzt.

## Beschreibung

Die Erfindung betrifft eine gekapselte elektrische rotierende Maschine, insbesondere zum Antreiben eines Schiffs oder Unterseeboots, aufweisend einen Rotor, einen den Rotor umgebenden Stator und einen zwischen dem Rotor und dem Stator befindlichen Luftspalt.

Weiterhin betrifft die Erfindung einen Kompressorantrieb, ein Schiff oder ein Unterseeboot, aufweisend mindestens eine derartige gekapselte elektrische rotierende Maschine.

Die Erfindung betrifft ferner ein Verfahren zur Herstellung eines gekapselten Stators.

Außerdem betrifft die Erfindung einen Stator mit gekapselten Statorwicklungen, welcher mit Hilfe eines derartigen Verfahrens hergestellt ist.

Eine derartige gekapselte elektrische rotierende Maschine wird beispielsweise in einem, vorzugsweise integrierten, Kompressorantrieb verwendet, wobei sich der Antrieb selbst in einer Gasatmosphäre befindet. Das zu fördernde gasförmige Medium, beispielsweise Naturgas, kann aggressive Substanzen aufweisen, die den Stator, insbesondere die Statorwicklungen, oder den Rotor, insbesondere die Rotorwicklungen, angreifen können.

Weiterhin wird eine derartige gekapselte elektrische rotierende Maschine in Schiffsantrieben verwendet, wobei der Stator, beispielsweise zur Kühlung, mit Meerwasser umspült wird. Durch das im Meerwasser enthaltene Salz kann der Stator und/oder der Rotor ebenfalls angegriffen werden.

Aus der Patentanmeldung WO 2004/107532 A1 ist eine elektrische Maschine mit druckfest gekapseltem Stator für einen integrierten Kompressorantrieb bekannt, wobei die Wickelköpfe des Stators in einen festen Verband eingebettet sind, auf den sich die Kapselung abstützt.

Aus der Patentanmeldung WO 2008/046817 A1 ist eine gekapselte elektrische Maschine bekannt, wobei der Stator zur effizienten Kühlung eine Flüssigkeitskühleinrichtung mit einem entsprechenden Statorkühlkreislauf aufweist, wobei die die Kapselung einen Teil der Außenwand des Kühlkreislaufs bildet.

Aus dem Patent US 4,831,297 A ist ein tauchfähiger elektrischer Antriebsmotor bekannt, welcher ein abgedichtetes zylindrisches Statorgehäuse aufweist.

Der Erfindung liegt die Aufgabe zugrunde, eine gekapselte elektrische rotierende Maschine bereitzustellen, welche, im Vergleich zum Stand der Technik, eine hohe Effizienz und eine kompakte Bauweise aufweist.

Diese Aufgabe wird durch eine gekapselte elektrische rotierende Maschine, aufweisend einen Rotor, einen den Rotor umgebenden Stator und einen zwischen dem Rotor und dem Stator befindlichen Luftspalt, gelöst, wobei der Stator Statorwicklungen aufweist, welche gekapselt sind und wobei der Stator unmittelbar an den Luftspalt angrenzt.

Durch die Kapselung sind die Statorwicklungen gegen jegliche Arten von Gasen und Flüssigkeiten geschützt, welche die Maschine umströmen und beispielsweise zur Kühlung und/oder zur Prozessierung verwendet werden. Da der Stator unmittelbar an den Luftspalt angrenzt, ist der Luftspalt optimal klein. Ein ideal kleiner Luftspalt führt zu optimalen Leistungsparametern, beispielsweise einer idealen Leistungseffizienz, der gekapselten elektrischen rotierenden Maschine. Weiterhin ist es aufgrund der hohen Effizienz möglich, eine kleinere gekapselte elektrische rotierende Maschine für eine geforderte Leistung zu verwenden, was Bauraum einspart.

Die Aufgabe wird weiterhin durch ein Schiff oder Unterseeboot gelöst, welches mindestens eine derartige gekapselte elektrische rotierende Maschine aufweist.

Durch eine leistungseffiziente und kompakte gekapselte elektrische rotierende Maschine erhöht sich die Reichweite eines derartigen Schiffes oder Unterseeboots und es ist weniger Platz für den Antrieb des Schiffes oder Unterseeboots erforderlich.

Ferner wird die Aufgabe durch ein Verfahren zur Herstellung eines gekapselten Stators gelöst, wobei Statorwicklungen in ein Statorjoch eingesetzt werden, daraufhin ein Statorblechpaket, welches bevorzugt aus Stahl gefertigt ist, mit Hilfe eines Schrumpfverfahrens fest mit dem Statorjoch verbunden wird, und im nächsten Schritt eine Statorwickelkopfkapselung über einen Statorwickelkopf der Statorwicklungen angeordnet und mit dem Statorjoch und/oder mit dem Statorblechpaket verbunden wird.

Bei einem Schrumpfverfahren wird bevorzugt das Statorblechpaket, beispielsweise um einige hundert Grad Celsius, erhitzt, wodurch sich der Innendurchmesser des Statorblechpakets aufgrund von Wärmeausdehnung, welche auch thermische Expansion genannt wird, vergrößert. Das durch die thermische Expansion vergrößerte Statorblechpaket wird im erhitzten Zustand über das Statorjoch gestülpt. Beim Abkühlen des Statorblechpakets findet eine Wärmeschrumpfung, welche auch thermische Kontraktion genannt wird, statt wodurch das Statorblechpaket die vorherige Größe wieder bekommt und sowohl mechanisch fest als auch elektrisch leitend mit dem Statorjoch verbunden ist. Dies ist besonders vorteilhaft, da so eine mechanisch feste und elektrisch leitfähige Verbindung ohne zusätzliche Prozessschritte hergestellt wird. Weiterhin ist diese Verbindung kompakt, sehr stabil und von äußeren Einflüssen nahezu unabhängig.

Außerdem wird die Aufgabe durch einen Stator mit gekapselten Statorwicklungen gelöst, welcher mit Hilfe eines derartigen Verfahrens hergestellt ist.

Durch die Kapselung sind die Statorwicklungen gegen jegliche Art von Gasen und Flüssigkeiten geschützt, welche die Maschine umströmen und beispielsweise zur Kühlung und/oder zur Prozessierung verwendet werden. Mit Hilfe eines derartigen Fertigungsverfahrens wird der Stator sehr robust.

Bei einer bevorzugten Ausführungsform ist die elektrische rotierende Maschine dafür vorgesehen, von umgebendem Wasser, insbesondere Meerwasser, umströmt zu werden. Dies ist besonders vorteilhaft, da so die Kühlung der elektrischen rotierenden Maschine, insbesondere der Statorwicklungen, sehr effizient und platzsparend erfolgt.

In besonders vorteilhafter Weise sind die gekapselten Statorwicklungen von einer Kühlflüssigkeit, insbesondere Öl, umgeben. Dies ermöglicht eine sehr gute Kühlung der Statorwicklungen, da so die Wärme schnell und effektiv, beispielsweise durch die Maschine umströmendes Kühlwasser, abtransportiert werden kann.

Bei einer weiteren vorteilhaften Ausgestaltung weist der Stator ein Statorjoch und ein das Statorjoch umgebendes Statorblechpaket auf, wobei die Statorwicklungen durch das Statorjoch verlaufen und das Statorjoch unmittelbar an den Luftspalt angrenzt. Da das Statorjoch direkt an den Luftspalt angrenzt, ist der Luftspalt ideal klein, was zu optimalen Leistungsparametern, beispielsweise einer idealen Leistungseffizienz, der tauchfähigen elektrischen rotierenden Maschine führt. Weiterhin ist es aufgrund der hohen Effizienz möglich, eine kleinere gekapselte elektrische rotierende Maschine für eine geforderte Leistung zu verwenden, was Bauraum einspart.

Bei einer bevorzugten Ausführungsform weisen die Statorwicklungen einen Statorwickelkopf auf, wobei die Statorwicklungen derartig gekapselt sind, dass der Statorwickelkopf von einer Statorwickelkopfkapselung umgeben ist und wobei die Statorwickelkopfkapselung mit dem Statorjoch und/oder mit dem Statorblechpaket verbunden ist. Durch die Kapselung ist der Statorwickelkopf gegen jegliche Art von Gasen und Flüssigkeiten geschützt, welche die Maschine umströmt und beispielsweise zur Kühlung und/oder zur Prozessierung verwendet wird.

In besonders vorteilhafter Weise weist die Statorwickelkopfkapselung ein abrasionsbeständiges und/oder ein korrosionsbeständiges Material auf. Dies ist besonders vorteilhaft, da durch das korrosionsbeständige Material die Statorwickelkopfkapselung und somit auch der Statorwickelkopf vor einer Zersetzung durch beispielsweise aggressive Gase oder Flüssigkeiten geschützt sind. Da das Gas oder die Flüssigkeit auch Partikel aufweisen kann, die zu einer Abrasion der Statorwickelkopfkapselung führen können, ist es vorteilhaft, wenn die Statorwickelkopfkapselung ein abrasionsbeständiges Material aufweist.

Bei einer weiteren vorteilhaften Ausgestaltung ist die Statorwickelkopfkapselung mit dem Statorjoch und/oder mit dem Statorblechpaket über eine Statorschweißnaht verbunden. Diese verschweißte Verbindung ist besonders vorteilhaft, da sie sowohl elektrisch leitfähig als auch mechanisch stabil ist. Weiterhin dichtet sie den Raum um den Statorwickelkopf sehr gut ab.

Bei einer bevorzugten Ausführungsform weist der Rotor Rotorwicklungen auf, welche durch den Rotor verlaufen und gekapselt sind, wobei der Rotor unmittelbar an den Luftspalt angrenzt. Insbesondere bei sehr großen Leistungen von mehr als einem Megawatt kommen sehr oft fremderregte Synchronmaschinen zu Einsatz, welche bevorzugt einen Rotor mit Rotorwicklungen aufweisen. Durch die Kapselung sind die Rotorwicklungen, genau wie die Statorwicklungen, gegen jegliche Art von Gasen und Flüssigkeiten geschützt, welche die Maschine umströmen und beispielsweise zur Kühlung und/oder zur Prozessierung verwendet werden. Da der Rotor unmittelbar an den Luftspalt angrenzt, ist der Luftspalt optimal klein, was zu optimalen Leistungsparametern, beispielsweise einer idealen Leistungseffizienz, führt. Weiterhin kann aufgrund der durch den kleinen Luftspalt begünstigten hohen Effizienz Bauraum einspart werden.

In einer vorteilhaften Ausgestaltung weisen die Rotorwicklungen einen Rotorwickelkopf auf, wobei die Rotorwicklungen derartig gekapselt sind, dass der Rotorwickelkopf von einer Rotorwickelkopfkapselung umgeben ist und wobei die Rotorwickelkopfkapselung mit dem Rotor verbunden ist. Durch die Kapselung ist der Rotorwickelkopf gegen jegliche Art von Gasen und Flüssigkeiten geschützt, welche die Maschine, insbesondere den Rotorwickelkopf, umströmt.

In besonders vorteilhafter Weise weist die Rotorwickelkopfkapselung ein abrasionsbeständiges und/oder ein korrosionsbeständiges Material auf. Dies ist besonders vorteilhaft, da durch das korrosionsbeständige Material die Rotorwickelkopfkapselung und somit auch der Rotorwickelkopf vor einer Zersetzung durch beispielsweise aggressive Gase und Flüssigkeiten geschützt sind. Da das Gas oder die Flüssigkeit auch Partikel aufweisen kann, die zu einer Abrasion der Statorwickelkopfkapselung führen können, ist es vorteilhaft, wenn die Statorwickelkopfkapselung ein abrasionsbeständiges Material aufweist.

Besonders vorteilhaft ist die Rotorwickelkopfkapselung mit dem Rotor über eine Rotorschweißnaht verbunden. Diese verschweißte Verbindung ist besonders vorteilhaft, da sie sowohl elektrisch leitfähig als auch mechanisch stabil ist. Weiterhin dichtet sie den Raum um den Rotorwickelkopf sehr gut ab.

Bei einer bevorzugten Ausführungsform sind die gekapselten Rotorwicklungen von einer Kühlflüssigkeit, insbesondere Öl, umgeben. Dies ermöglicht eine sehr gute Kühlung der Rotorwicklungen, da so die Wärme schnell und effektiv abtransportiert werden kann.

Auf besonders vorteilhafter Weise wird eine erste innere Mantelfläche (3a) des Statorblechpakets (3) mit einer zweiten äußeren Mantelfläche (4b) des Statorjochs (4) mit Hilfe eines Schrumpfverfahrens fest verbunden. Dies ist besonders vorteilhaft, da so die in das Statorjoch eingesetzten Wicklungen innerhalb des Rotors komplett umschlossen und somit vor einer Zersetzung durch beispielsweise aggressive Gase und Flüssigkeiten geschützt sind.

Vorteilhaft ist das Statorjoch dafür vorgesehen, mit einer zweiten inneren Mantelfläche unmittelbar an einen Luftspalt anzugrenzen. Da das Statorjoch unmittelbar an den Luftspalt angrenzt, ist der Luftspalt optimal klein. Ein ideal kleiner Luftspalt führt zu optimalen Leistungsparametern.

Im Folgenden wird die Erfindung anhand der in den Figuren dargestellten Ausführungsbeispiele näher beschrieben und erläutert.

Es zeigen:
- FIG 1: einen Längsschnitt einer gekapselten elektrischen rotierenden Maschine nach dem Stand der Technik,
- FIG 2: einen Längsschnitt einer ersten Ausführungsform einer gekapselten elektrischen rotierenden Maschine,
- FIG 3: einen Längsschnitt einer zweiten Ausführungsform einer gekapselten elektrischen rotierenden Maschine,
- FIG 4: einen Längsschnitt einer dritten Ausführungsform einer gekapselten elektrischen rotierenden Maschine,
- FIG 5: den schematischen Ablauf eines Fertigungsverfahrens eines gekapselten Stators,
- FIG 6: einen Längsschnitt eines Schiffs mit vier gekapselten elektrischen rotierenden Maschinen, und
- FIG 7: eine Seitenansicht eines Unterseeboots mit einer gekapselten elektrischen rotierenden Maschine.

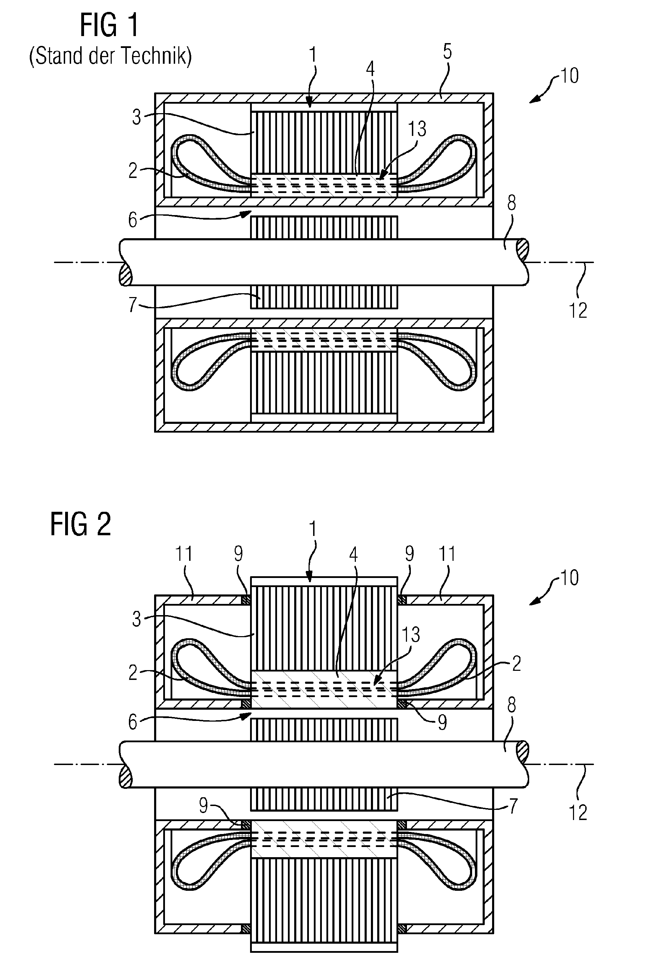

FIG 1 zeigt einen Längsschnitt einer gekapselten elektrischen rotierenden Maschine 10 nach dem Stand der Technik, wobei der Stator 1 gekapselt ist. Die elektrischen rotierenden Maschine 10 weist neben dem Stator 1 einen Rotor 7 auf welcher drehfest mit einer Welle 8 verbunden ist. Die Welle dreht sich um eine Rotationsache 12, welche eine axiale Richtung, eine radiale Richtung und eine Umfangsrichtung definiert. Zwischen Stator 1 und Rotor 7 befindet sich ein Luftspalt 7. Der Stator 3 weist ein Statorjoch 4 auf, in dem die Statorwicklungen 13 verlaufen. Beim Statorjoch 4 handelt es sich um eine Kostruktion aus einzelnen Formblechen, welche geschichtet, gepresst und anschließend zusammengeschweißt werden. Weiterhin ist das Statorjoch 4, welches aus einem ferromagnetischen Stoff, beispielsweise Eisen oder Stahl, gefertigt wird, magnetisch leitfähig. Die Statorwicklungen 13 werden vorzugsweise in nach oben offene Schlitze des Statorjochs 4 eingesetzt. Ein Statorblechpaket 3, welches ebenfalls aus einem ferromagnetischen Stoff, beispielsweise Eisen oder Stahl, gefertigt wird, umgibt das Statorjoch 4 und ist eletrisch leitend und mechanisch fest mit diesem verbunden. Die Statorwicklungen 13, welche bevorzugt aus Kupfer gefertigt werden, weisen an den axialen Enden des Statorjochs 4 Statorwickelköpfe 2 auf.

Eine Statorkapselung 5 umgibt den gesamten Stator 1 und versiegelt den Stator hermetisch. Die Statorkapselung 5 verläuft auch durch den Luftspalt 6 zwischen dem Stator 1 und dem Rotor 7. Für eine hohe Leistungseffizienz der gekapselten elektrischen rotierenden Maschine 10 ist der Luftspalt 6 möglichst klein zu halten. Ein zusätzliches Material zwischen dem Stator und dem Rotor verschlechtert demnach die Effizienz der gekapselten elektrischen rotierenden Maschine 10.

FIG 2 zeigt einen Längsschnitt einer ersten Ausführungsform einer gekapselten elektrischen rotierenden Maschine 1, wobei der Aufbau der elektrischen rotierenden Maschine 1 dem aus FIG 1 entspricht. Auf eine Statorkapselung 5, welche den gesamten Stator 1 hermetisch versiegelt, wird jedoch verzichtet. Stattdessen sind die Statorwickelköpfe 2 von Statorwickelkopfkapselungen 11 umgeben, welche mit Statorschweißnähten 9 am Statorjoch 4 und am Statorblechpaket 3 verschweißt sind. Durch das Statorjoch 4, das Statorblechpaket 3 und die mit dem Statorjoch 4 und Statorblechpaket 3 verschweißten Statorwickelkopfkapselungen 11 sind die Statorwicklungen 13 mit ihren Statorwickelköpfen 2 hermetisch gekapselt, wodurch sie gegen jegliche Art von Gasen und Flüssigkeiten geschützt sind, welche die gekapselte elektrische rotierende Maschine 1 umströmen. Bei integrierten Kompressorantrieben, bei denen sich der Antrieb selbst in einer Gasatmosphäre befindet, kann beispielsweise ein zu förderndes Naturgas aggressive Substanzen aufweisen, die den Stator 1, insbesondere die Statorwicklungen 13, angreifen können. Auch bei Schiffsantrieben, bei denen der Stator 1, beispielsweise zur besseren Kühlung, mit Meerwasser umspült wird, kann das im Meerwasser enthaltene Salz die Statorwicklungen 13 angreifen. Weiterhin ist der Luftspalt 6 optimal klein, da der Stator 1 unmittelbar an den Luftspalt 6 angrenzt. Ein ideal kleiner Luftspalt 6 führt zu optimalen Leistungsparametern der gekapselten elektrischen rotierenden Maschine 1. Weiterhin ist es aufgrund der hohen Effizienz möglich, eine kleinere gekapselte elektrische rotierende Maschine 1 für eine geforderte Leistung zu verwenden, was Bauraum einspart. Zur besseren Wärmeabfuhr sind die gekapselten Statorwicklungen (13) mit ihren Statorwickelköpfen 2 von einer Kühlflüssigkeit, insbesondere Öl, umgeben.

Die Statorwickelkopfkapselung 11 weist ein korrosionsbeständiges Material auf, welches chemisch beständig gegenüber den Gasen und Flüssigkeiten, welche die gekapselte elektrische rotierende Maschine 1 umströmen, ist und eine chemische Barriere zwischen den strömenden Substanzen und den Statorwicklungen 13 mit ihren Statorwickelköpfen 2 bildet. Weiterhin weist die Statorwickelkopfkapselung 11 ein abrasionsbeständiges, bevorzugt auf der Oberfläche, auf, welches verhindert, dass die in den Flüssigkeiten und Gasen, welche die gekapselte elektrische rotierende Maschine 1 umströmen, vorkommenden Partikel die Statorwickelkopfkapselung 11 durch Abrieb oder Abschliff beschädigen. Als abrasionsbeständige Materialien kommen unter anderem Nickel oder dichte Kunststoffe, beispielsweise Polyetheretherketon, kurz PEEK, in Frage.

Die Statorwickelkopfkapselung 11 sollte weiterhin eine gute Wärmeleitfähigkeit aufweisen, damit die Verlustwärme von den Statorwickelköpfen 2 effizient an ein die gekapselte elektrische rotierende Maschine 1 umströmende Kühlmedium abgegeben werden kann.

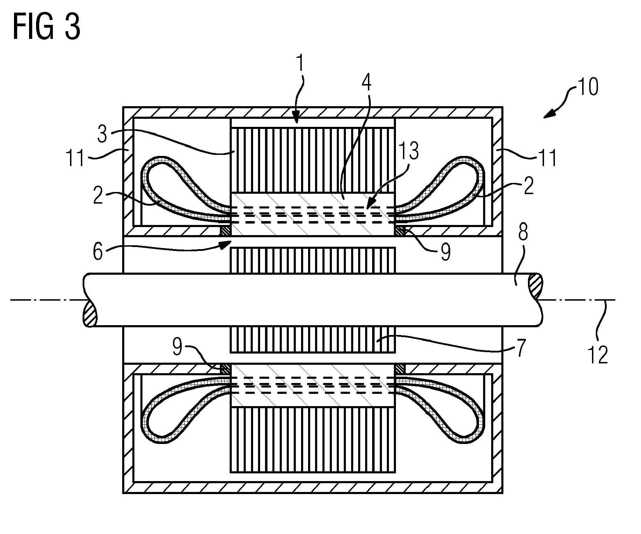

FIG 3 zeigt einen Längsschnitt einer zweiten Ausführungsform einer gekapselten elektrischen rotierenden Maschine 1, wobei der Aufbau der elektrischen rotierenden Maschine 1 dem aus FIG 1 und FIG 2 entspricht. Auf eine Statorkapselung 5, welche den gesamten Stator 1 hermetisch versiegelt, wird jedoch ebenfalls verzichtet. Stattdessen sind die Statorwickelköpfe 2 von einer Statorwickelkopfkapselung 11 umgeben, welche mit Hilfe von Statorschweißnähten 9 mit dem Statorjoch 4 an den axialen Enden des Statorjochs 4 verschweißt ist. Weiterhin umschließt die Statorwickelkopfkapselung 11, im Gegensatz zur ersten Ausführungsform aus FIG 2, das Statorblechpaket 3 des Stators 1 an der äußeren Seite des Stators 1 komplett und versiegelt somit das Statorblechpaket 3 ebenfalls hermetisch.

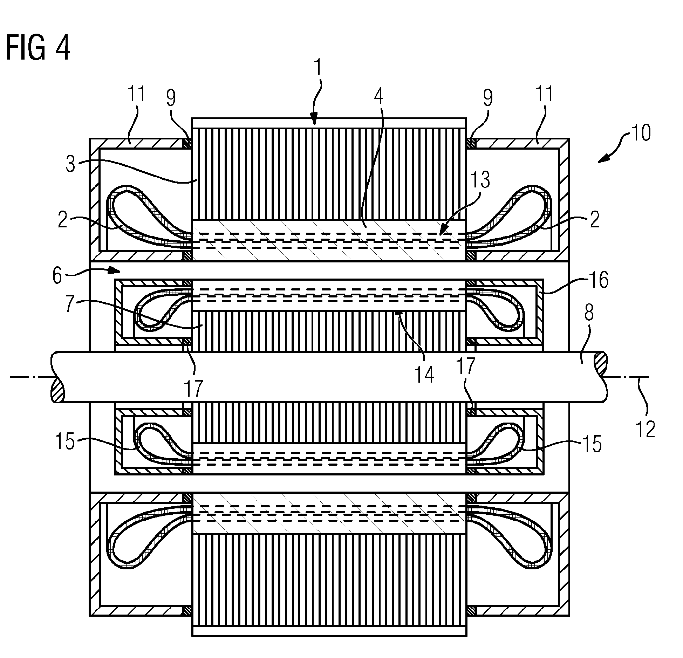

FIG 4 zeigt einen Längsschnitt einer dritten Ausführungsform einer gekapselten elektrischen rotierenden Maschine 1. Der Aufbau der elektrischen rotierenden Maschine 1 entspricht dem aus FIG 1 bis FIG 3. Die statorseitige Kapselung erfolgt analog zu FIG 2. Da es sich bei der gekapselten elektrischen rotierenden Maschine 1 in FIG 4 um eine fremderregte Synchronmaschine handelt, weist auch der Rotor 7 Rotorwicklungen 14 auf, welche durch den Rotor 7 verlaufen. Die Rotorwicklungen 14 weisen an den axialen Enden des Rotors 7 Rotorwickelköpfe auf.

Die Rotorwicklungen 14 sind durch den Rotor 7, der die Rotorwicklungen 14 umgibt und durch Rotorwickelkopfkapselungen 16 hermetisch gekapselt. Die Rotorwickelkopfkapselungen 16 sind hierbei mit dem Rotor 7 an dessen axialen Enden über Rotorschweißnähte 17 verschweißt und dadurch hermetisch versiegelt. Durch die hermetische Versiegelung sie gegen jegliche Art von Gasen und Flüssigkeiten geschützt sind, welche die gekapselte elektrische rotierende Maschine 1 umströmen. Bei integrierten Kompressorantrieben, bei denen sich der Antrieb selbst in einer Gasatmosphäre befindet, kann beispielsweise ein zu förderndes Naturgas aggressive Substanzen aufweisen, die den Rotor 7, insbesondere die Rotorwicklungen 14, angreifen können. Auch bei Schiffsantrieben, bei denen der Rotor mit Meerwasser umspült wird, kann das im Meerwasser enthaltene Salz die Rotorwicklungen 14 angreifen. Weiterhin ist der Luftspalt 6 optimal klein, da der Rotor 7 unmittelbar an den Luftspalt 6 angrenzt. Ein ideal kleiner Luftspalt 6 führt zu optimalen Leistungsparametern der gekapselten elektrischen rotierenden Maschine 1.

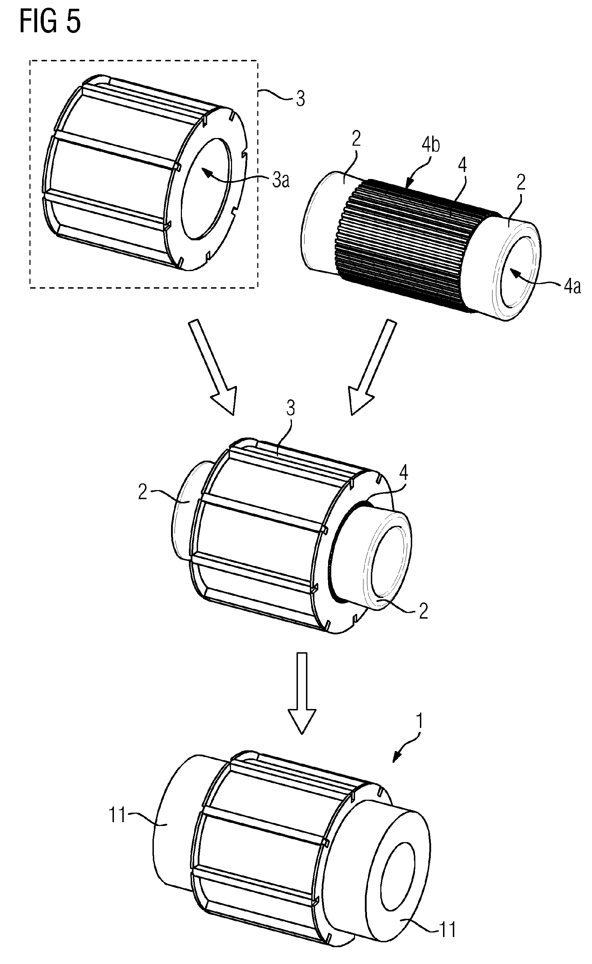

FIG 5 zeigt den schematischen Ablauf eines Fertigungsverfahrens eines gekapselten Stators 1. Das Statorblechpaket 3 wird in einem ersten Fertigungsschritt aus mehreren Einzelblechen, welche einen ferromagnetischen Stoff, beispielsweise Eisen oder Stahl, aufweisen, geschichtet, gepresst und anschließend zusammengeschweißt. Das Statorblechpaket 3 weist eine erste innere Mantelfläche 3a auf. Das Statorjoch 4 wird in einem weiteren Fertigungsschritt ebenfalls aus mehreren einzelnen Formblechen, welche geschichtet, gepresst und anschließend zusammengeschweißt werden, aus einem ferromagnetischen Werkstoff, beispielsweise Eisen oder Stahl, gefertigt und ist magnetisch leitfähig. Das Statorjoch 4 weist eine zweite innere Mantelfläche 4a und eine zweite äußere Mantelfläche 4b auf. In einem weiteren Schritt werden die Statorwicklungen 13, welche bevorzugt aus Kupfer gefertigt werden, in die nach oben offenen Schlitze des Statorjochs 4 eingesetzt. Die eingesetzten Statorwicklungen 13 weisen Statorwickelköpfe 2 an den axialen Enden des Statorjochs 4 auf. Im nächsten Fertigungsschritt wird das fertige Statorblechpaket 3 mit Hilfe eines Schrumpfverfahrens fest mit dem Statorjoch 4 verbunden. Bei diesem Schrumpfverfahren wird das Statorblechpaket 3 um einige hundert Grad Celsius erhitzt, wodurch sich der Innendurchmesser des Statorblechpakets 3 aufgrund von Wärmeausdehnung, welche auch thermische Expansion genannt wird, vergrößert. Das durch die thermische Expansion vergrößerte Statorblechpaket 3 wird im erhitzten Zustand derartig über das Statorjoch 4 gestülpt, dass sich die erste innere Mantelfläche 3a des Statorblechpakets 3 mit der zweiten äußeren Mantelfläche 4b des Statorjochs 4 verbindet. Beim Abkühlen des Statorblechpakets 3 findet eine Wärmeschrumpfung, welche auch thermische Kontraktion genannt wird, statt wodurch das Statorblechpaket 3 die vorherige Größe wieder bekommt und sowohl mechanisch fest als auch elektrisch leitend mit dem Statorjoch 4 verbunden ist. Dies ist besonders vorteilhaft, da so eine mechanisch feste und elektrisch leitfähige Verbindung ohne zusätzliche Prozessschritte hergestellt wird. In einem weiteren Fertigungsschritt wird eine Statorwickelkopfkapselung 11 über einen Statorwickelkopf 2 angeordnet und mit dem Statorjoch 4 und mit dem Statorblechpaket 3 über Statorschweißnähte 9 verschweißt. Alternativ kann die Statorwickelkopfkapselung 11 verlötet oder anderweitig verbunden werden, um eine hermetische Versiegelung der Statorwicklungen 13 über das Statorblechpaket 3, das Statorjoch 4 und die Statorwickelkopfkapselung 11 zu erreichen. Dies ist vorteilhaft, da so die in das Statorjoch 4 eingesetzten Statorwicklungen 13 des Stators 1 komplett umschlossen und somit vor einer Zersetzung durch beispielsweise aggressive Gase und Flüssigkeiten geschützt sind. Die Statorwickelkopfkapselung 11 weisen ein korrosionsbeständiges Material auf, welches chemisch beständig gegenüber den Gasen und Flüssigkeiten, welche die gekapselte elektrische rotierende Maschine 1 umströmen, ist und eine chemische Barriere zwischen den strömenden Substanzen und den Statorwicklungen 13 mit ihren Statorwickelköpfen 2 bildet. Weiterhin weist die Statorwickelkopfkapselung 11 ein abrasionsbeständiges Material, bevorzugt auf der Oberfläche, auf, welches verhindert, dass die in den Flüssigkeiten und Gasen, welche die gekapselte elektrische rotierende Maschine 1 umströmen, vorkommenden Partikel die Statorwickelkopfkapselung 11 durch Abrieb oder Abschliff beschädigen. Als abrasionsbeständige Materialien kommen unter anderem Nickel oder dichte Kunststoffe, beispielsweise Polyetheretherketon, kurz PEEK, in Frage.

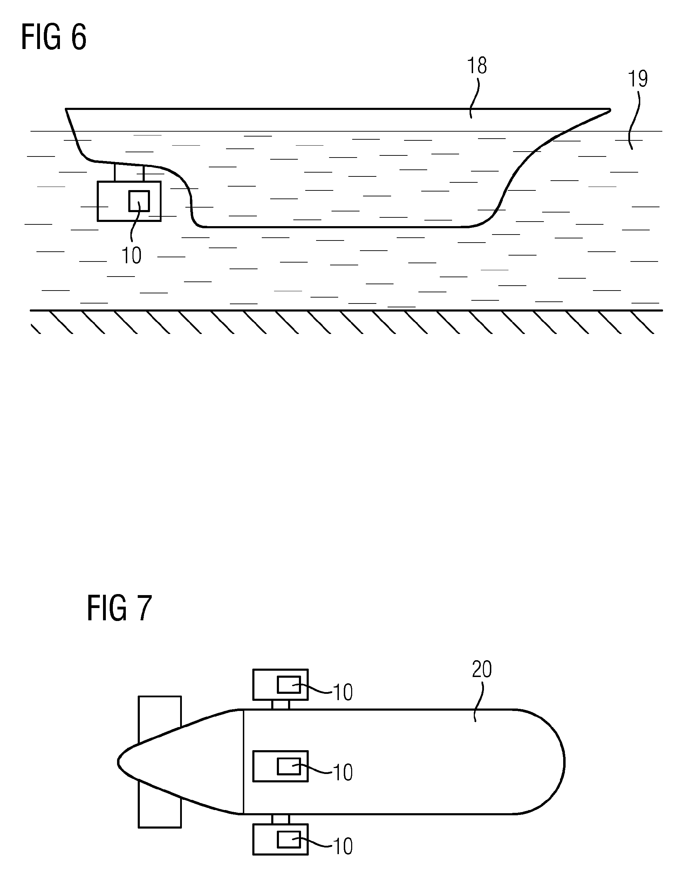

FIG 6 zeigt einen Längsschnitt eines Schiffs 18 mit einer gekapselten elektrischen rotierenden Maschine 10. Die gekapselte elektrische rotierende Maschine 10 ist, wie in einer der Figuren 1 bis 4 gezeigt, tauchfähig ausgeführt und befindet sich vollständig unter Wasser 19. Sie wird beispielsweise von salzhaltigem Meerwasser umströmt, welches bevorzugt zur Kühlung verwendet wird. Dabei kann die als Motor eingesetzte gekapselte elektrische rotierende Maschine 10 direkt oder über ein Getriebe als Schiffsantrieb eingesetzt werden.

FIG 7 zeigt eine Seitenansicht eines Unterseeboots 20 mit exemplarisch vier gekapselten elektrischen rotierenden Maschinen 10. Die gekapselten elektrischen rotierenden Maschinen 10 sind, wie in einer der Figuren 1 bis 4 gezeigt, ebenfalls tauchfähig ausgeführt und sind am hinteren Teil des Unterseeboots 20 um 90° versetzt in Umfangsrichtung angeordnet. Weitere Anordnungen mit mindestens einer elektrischen rotierenden Maschine 10 an einem Unterseeboot 20 sind möglich. Die vier gekapselten elektrischen rotierenden Maschinen 10 befinden sich vollständig unter Wasser 19 und werden beispielsweise von salzhaltigem Meerwasser umströmt, welches bevorzugt zur Kühlung verwendet wird. Dabei können die als Motor eingesetzten gekapselten elektrischen rotierenden Maschinen 10 direkt oder über ein Getriebe als Schiffsantrieb eingesetzt werden.

## Patentansprüche

1. Gekapselte elektrische rotierende Maschine (10), aufweisend einen Rotor (7), einen den Rotor (7) umgebenden Stator (1) und einen zwischen dem Rotor (7) und dem Stator (1) befindlichen Luftspalt (6),
wobei der Stator (1) Statorwicklungen (13) aufweist, welche gekapselt sind und
wobei der Stator (1) unmittelbar an den Luftspalt (6) angrenzt.

2. Elektrische rotierende Maschine (10) nach Anspruch 1, welche tauchfähig ist und dafür vorgesehen ist, von umgebendem Wasser, insbesondere Meerwasser, umströmt zu werden.

3. Elektrische rotierende Maschine (10) nach einem der Ansprüche 1 oder 2,
wobei die gekapselten Statorwicklungen (13) von einer Kühlflüssigkeit, insbesondere Öl, umgeben sind.

4. Elektrische rotierende Maschine (10) nach einem der Ansprüche 1 bis 3,
wobei der Stator (1) ein Statorjoch (4) und ein das Statorjoch (4) umgebendes Statorblechpaket (3) aufweist, wobei die Statorwicklungen (13) durch das Statorjoch (4) verlaufen und das Statorjoch (4) unmittelbar an den Luftspalt (6) angrenzt.

5. Elektrische rotierende Maschine (10) nach einem der Ansprüche 1 bis 4,
wobei die Statorwicklungen (13) einen Statorwickelkopf (2) aufweisen, wobei die Statorwicklungen (13) derartig gekapselt sind, dass der Statorwickelkopf (2) von einer Statorwickelkopfkapselung (11) umgeben ist und wobei die Statorwickelkopfkapselung (11) mit dem Statorjoch (4) und/oder mit dem Statorblechpaket (3) verbunden ist.

6. Elektrische rotierende Maschine (10) nach Anspruch 5,
wobei die Statorwickelkopfkapselung (11) ein abrasionsbeständiges und/oder korrosionsbeständiges Material aufweist.

7. Elektrische rotierende Maschine (10) nach einem der Ansprüche 5 oder 6,
wobei die Statorwickelkopfkapselung (11) mit dem Statorjoch (4) und/oder mit dem Statorblechpaket (3) über eine Statorschweißnaht (9) verbunden ist.

8. Elektrische rotierende Maschine (10) nach einem der Ansprüche 1 bis 7,
wobei der Rotor (7) Rotorwicklungen (14) aufweist, welche durch den Rotor (7) verlaufen und gekapselt sind, wobei der Rotor (7) unmittelbar an den Luftspalt (6) angrenzt.

9. Elektrische rotierende Maschine (10) nach Anspruch 8,
wobei die Rotorwicklungen (14) einen Rotorwickelkopf (15) aufweisen, wobei die Rotorwicklungen (14) derartig gekapselt sind, dass der Rotorwickelkopf (15) von einer Rotorwickelkopfkapselung (16) umgeben ist und wobei die Rotorwickelkopfkapselung (16) mit dem Rotor (7) verbunden ist.

10. Elektrische rotierende Maschine (10) nach Anspruch 9,
wobei die Rotorwickelkopfkapselung (16) ein abrasionsbeständiges und/oder ein korrosionsbeständiges Material aufweist.

11. Elektrische rotierende Maschine (10) nach einem der Ansprüche 9 oder 10,
wobei die Rotorwickelkopfkapselung (16) mit dem Rotor (7) über eine Rotorschweißnaht (17) verbunden ist.

12. Elektrische rotierende Maschine (10) nach einem der Ansprüche 8 bis 11,
wobei die gekapselten Rotorwicklungen (14) von einer Kühlflüssigkeit, insbesondere Öl, umgeben sind.

13. Kompressorantrieb, Schiff (18) oder Unterseeboot (20), aufweisend mindestens eine gekapselte elektrische rotierende Maschine (10) nach einem der Ansprüche 1 bis 12.

14. Verfahren zur Herstellung eines gekapselten Stators (1),
wobei Statorwicklungen (13) in ein Statorjoch (4) eingesetzt werden, daraufhin ein Statorblechpaket (3) mit Hilfe eines Schrumpfverfahrens fest mit dem Statorjoch (4) verbunden wird, und im nächsten Schritt eine Statorwickelkopfkapselung (11) über einen Statorwickelkopf (2) der Statorwicklungen (13) angeordnet und mit dem Statorjoch (4) und/oder mit dem Statorblechpaket (3) verbunden wird.

15. Verfahren nach Anspruch 14, wobei eine erste innere Mantelfläche (3a) des Statorblechpakets (3) mit einer zweiten äußeren Mantelfläche (4b) des Statorjochs (4) mit Hilfe eines Schrumpfverfahrens fest verbunden wird.

16. Stator (1) mit gekapselten Statorwicklungen (13), welcher mit Hilfe eines Verfahrens nach Anspruch 14 oder 15 hergestellt ist.

17. Stator (1) nach Anspruch 16, wobei das Statorjoch (4) dafür vorgesehen ist, mit einer zweiten inneren Mantelfläche (4a) unmittelbar an einen Luftspalt (6) anzugrenzen.
